**Europäisches Patentamt**

(19) **European Patent Office**

**Office européen des brevets**

(11) Veröffentlichungsnummer: **0 010 126**
**B1**

(12) **EUROPÄISCHE PATENTSCHRIFT**

(45) Veröffentlichungstag der Patentschrift: **30.06.82**

(51) Int. Cl.³: **A 01 N 37/02**

(21) Anmeldenummer: **79102821.0**

(22) Anmeldetag: **06.08.79**

(54) Z-(5)-Decenylacetat enthaltender Insektenlockstoff und seine Verwendung.

(30) Priorität: **09.08.78 DE 2834872**

(43) Veröffentlichungstag der Anmeldung:
**30.04.80 Patentblatt 80/9**

(45) Bekanntmachung des Hinweises auf die Patenterteilung:
**30.06.82 Patentblatt 82/26**

(84) Benannte Vertragsstaaten:
**AT BE CH DE FR GB IT NL**

(73) Patentinhaber: **HOECHST AKTIENGESELLSCHAFT**
**Postfach 80 03 20**
**D-6230 Frankfurt/Main 80 (DE)**

(72) Erfinder: **Bestmann, Hans-Jürgen, Prof. Dr.**
**Spitzwegstrasse 31**
**D-8520 Erlangen (DE)**
Erfinder: **Vostrowsky, Otto, Dr.**
**Schleifweg 17c**
**D-8521 Uttenreuth (DE)**
Erfinder: **Koschatzky, Karl-Heinrich**
**Röselstrasse 12**
**D-8500 Nürnberg (DE)**
Erfinder: **Knauf, Werner, Dr.**
**Völklinger Weg 64**
**D-6000 Frankfurt am Main 71 (DE)**

(56) Entgegenhaltungen:
BE - A - 821 951

AGRICULTURAL AND BIOLOGICAL CHEMI-STRY; Vol. 41, Nr. 8, August 1977, Tokyo, JP T. ANDO et al.: "Sex attractants for male lepidoptera", Seiten 1485—1492

(56) Entgegenhaltungen:

ANGEWANDTE CHEMIE, Vol. 90, Nr. 10. Oktober 1978, Weinheim, DE, H. J. BESTMAN et al.: "(Z)-5-Decenylacetat, ein Sexuallockstoff fürMännchen der Saateule Agrotis segetum (Lepidoptera)", Seiten 815—816

**0010126**

(56) Entgegenhaltungen:

APPLIED ENTOMOLOGY AND ZOOLOGY, Vol.
13, Nr. 4, November 1978, Tokyo, JP S. WAKA-
MURA: "Sex attractant pheromone of the
common cutworm moth", Seiten 290—295

CHEMICAL ABSTRACTS, Vo. 76, Nr. 1 3. Januar
1972, Zusammenfassung Nr. 764w, Seite 82,
rechte Spalte, K. V. LEBEDEVA et al.: "Substances attracting the turnip moth" &
Khim.Sel.Khoz. 1971, 9 (8) 592—3

ENVIRONMENTAL ENTOMOLOGY, Vol. 7, Nr. 3,
1978, Entomological Soc. of America, D. L.
STRUBLE et al.: "Sex attractant for adult males
of the red-backed cutworm, Euxoa ochrogaster"
Seiten 384—386

## Z-(5)-Decenylacetat enthaltender Insektenlockstoff und seine Verwendung

Bei der Such nach neuen, insbesondere umweltschonenden Methoden der Schädlingsbekämpfung haben seit einigen Jahren die Insektenlockstoffe (Pheromone) steigendes Interesse gefunden. Ihr Vorteil auf dem Gebiet der Pflanzenschutzes liegt in ihrer außergewöhnlichen Selektivität, die jeweils nur auf eine einzige Art, allenfalls auf eine eng begrenzte Zahl von Arten gerichtet ist, andere Arten dagegen unbeeinflußt läßt. Mit Hilfe von Pheromonen ist es daher möglich, eine bestimmte Schädlingsart gezielt zu bekämpfen, ohne das ökologische Gleichgewicht mehr als nötig zu stören.

Pheromone werden von zahlreichen Insekten ausgeschieden und üben auf andere Individuen derselben Spezies eine bestimmte Signalwirkung aus. Insbesondere gilt dies für die Sexualpheromone, die von den Weibchen einer Insektenart produziert werden, um die Männchen derselben Spezies zum Zwecke der Kopulation anzulocken. Dieses Phänomen kann man sich bei der Schädlingsbekämpfung auf dreierlei Weise zunutze machen:

1. durch Auslegung von Duftködern, die über weite Strecken hinweg die Männchen einer Schädlingsart anlocken, so daß sie an Ort und Stelle mit herkömmlichen Mitteln gezielt vernichtet werden können ("Abfangtechnik");

2. durch flächenmäßige Ausbringung von relativ hohen Konzentrationen des Pheromons, wodurch die zu bekämpfende Insektenpopulation desorientiert und an der Kopulation gehindert wird ("Konfusionstechnik");

3. durch Auslengung von Fallen zur Ermittlung der Besatzdichte einer Schädlingsart in einem bestimmten Gebiet und damit des günstigsten Zeitpunktes für eine Bekämpfung mit konventionellen Methoden ("Monitortechnik").

Zu den volkswirtschaftlich bedeutenden Schadinsekten zählt die zu den Nachtschmetterlingen (Noctuiden) gehörende Saateule (Agrotis segetum), die in Europa, Afrika und Asien ein bedeutender Schädling in Getreide- und Gemüse-Jungkulturen ist. Die Raupen, die sich tagsüber vorwiegend in der Erde aufhalten, beißen nachts die Jungpflanzen kurz über dem Erdboden an, bringen diese dadurch zum Umfallen und verursachen auf diese Weise schwere Ernteverluste. Unter entsprechenden äußeren Bedingungen kommt es zeitweilig zum schnellen Aufbau einer schädlichen Population. Es ist daher von besonderer Bedeutung, die Besatzdichte von Agrotis segetum regelmäßig zu überwachen, um den Aufbau einer schädlichen Population frühzeitig erkennen und geeignete Gegenmaßnahmen treffen zu können.

Eine verläßliche Methode zum sicheren und einfachen Nachweis der Schädlinge *vor* Beginn des Populationsaufbaus bzw. zu ihrer Bekämpfung fehlte bisher, da der Sexuallockstoff von Agrotis segetum nicht bekannt war. Es konnte lediglich davon ausgegangen werden, daß Agrotis segetum einen Sexuallockstoff benutzt [Arch. Phytopathol. Pflanzenschutz, *12*(3), 197—212 (1976)].

Sexuallockstoffe von Lepidopteren bestehen häufig aus einfachen Derivaten, insbesondere Alkoholen, Aldehyden und Acetaten von Mono- bzw. Dienen mittlerer Kettenlänge die ihre maximale Lockwirkung vielfach in bestimmten Mischungen der geometrischen Z(cis)/E(trans)-Isomeren entfalten. [Tetrahedron *33*, 1845 ff. (1977)].

Mit Hilfe der sog. EAG-(Elektroantennogramm)-Technik [Nachr. Chem. Techn. *21*, 501 (1973)] mit einer größeren Anzahl synthetischer, potentieller Pheromonanaloga aus den oben genannten Verbindungsklassen sowie durch ein biologisches Freiland-screening wurde nun gefunden, daß Z-(5)-Decenylacetat zur selektiven Anlockung von Agrotis segetum-Männchen verwendet werden kann, also den Charakter eines Sexuallockstoffs besitzt.

Durch Vergleichsuntersuchungen mit natürlichem, biologischen Material (Drüsenextrakten von Agrotis segetum-Weibchen) ließ sich sodann bestätigen, daß Z-(5-Decenylacetat auch die wesentliche Komponente des natürlichen Sexuallockstoffs von Agrotis segetum darstellt.

Es ist bekannt, daß zahlreiche Acetate welche eine geradkettige ungesättigte ($C_{10}$—$C_{16}$) Estergruppe enthalten als Sexuallockstoffe bei Lepidopteren wirken (Agric. Biol. Chem. *41*, 1485—92 (1977)). Von Z-(5)-Decenylacetat ist über eine Lockwirkung bei Lepidopteren bisher jedoch nichts veröffentlicht worden. Vielmehr weiß man, daß die Verbindung bei Männchen der Spezies Euxoa ochrogaster eine Inhibitorwirkung besitzt (Environmental Entomology 7 (3), 348—6 (1978)). Lediglich beim Pfirsichtriebbohrer (Anarsia lineatella), einer Käferart, wurde Z-(5)-Decenylacetat als eine Komponente des Pheromons ermittelt (Environmental Entomology 4 (4), 580—82 (1975)).

Gegenstand der Erfindung sind somit Mittel zur Anlockung und Bekämpfung von Agrotis segetum, die gekennzeichnet sind durch einen Gehalt an Z-(5)-Decenylacetat.

Das Z/E-(5)-Decenylacetat läßt sich nach bekannten Methoden herstellen, z.B. durch Kondensation von 5-Hexin-1-ol-tetrahydropyranyläther mit Butylbromid und reduzierende Hydrierung über $Pd/CaCO_3$ oder mit Natriumamid in flüssigem $NH_3$ [Environmental Entomology, *4*(4), 580 (1975)]. Das bei der Synthese erhaltene Produkt ist gewöhnlich mit geringen Anteilen (<10%) des E-Isomeren verunreinigt. Auch das unreine Produkt ist jedoch als Pheromon voll wirksam. Gegenstand der Erfindung sind somit auch Mittel, die außer Z-(5)-Decenylacetat noch bis zu 10%, vorzugsweise bis zu 2% E-(5)-Decenylacetat enthalten.

Zur anwendungsgerechten Formulierung der Wirkstoffe kommen sowohl flüssige wie auch feste Präparationen in Frage. Als Lösungsmittel kommen hochsiedende, aromatische, aliphatische oder cycloaliphatische Verbindungen in Betracht. Neben Kohlenwasserstoffen eignen sich Ester, Äther oder Ketone besonders gut. Typische Vertreter dieser Klassen sind z.B.: Xylol, Methylnaphthaline, Paraffinöle, Cyclohexan, Cyclohexanon, Äthylglykolacetat, Isophoron und Dibutylphthalat. Diese Lösungsmittel können allein oder in Mischungen mit anderen Komponenten Verwendung finden.

Weiterhin können Lösungen in pflanzlichen, tierischen oder synthetischen Ölen oder Fetten und anderen verdunstungshemmenden Lösungsmitteln mit niedrigem Dampfdruck (wie z.B. Dioctylphthalat) zum Zwecke der Wirkungsverlängerung hergestellt werden.

Des weiteren ist es möglich, den Wirkstoff in oder an natürliche oder synthetische feste Träger wie Gummi, Kork, Zellulose, Kunststoffe, gemahlene Kohle, Holzmehl, Silikate, Bimskies, gebrannten Ton oder ähnliche feste Trägerstoffe zu binden oder in speziellen Kapselformulierungen oder Kunststoffbehältern einzusetzen, um so eine gleichmäßige Abgabe an die Luft über längere Zeiträume hinweg zu erreichen. Außerdem kann der Wirkstoff aus geeigneten Behältern (Kapillaren oder anderen Gefäßen) durch enge Öffnungen zur Verdunstung gebracht werden, wodurch über längere Zeiträume hinweg besonders gleichmäßige Duftkonzentrationen erzielt werden.

Der Gehalt dieser Zubereitungen an Wirkstoff kann innerhalb weiter Grenzen schwanken. Generell kann das Verhältnis Wirkstoff:Zusatzstoff im Bereich von 10:1 bis $1:10^6$ liegen. In Kapselformulierungen oder anderen geeigneten Behältern kann z.B. der Wirkstoff in reiner, unverdünnter Form angewendet werden und sein Gewichtsanteil, bezogen auf die Gesamtformulierung, sehr hoch sein und bis zu 90% betragen. Im allgemeinen genügen jedoch sehr geringe Wirkstoffkonzentrationen in den Zubereitungen, um eine Lockwirkung auf Agrotis-segetum-Männchen auszuüben. Bevorzugt ist ein Mengenverhältnis Wirkstoff:Zusatzstoff von 1:1000 bis $1:10^6$.

Die erfindungsgemäßen Mittel können in verschiedener Weise angewendet werden. Z.B. kann man Fallen auslegen, die mit einer Formulierung desselben imprägniert sind. Hierdurch kann man die genaue Populationsdichte von Agrotis segetum bestimmen und, sobald diese eine kritische Grenze erreicht hat, eine Bekämpfung mit konventionellen Methoden durchführen.

Für diese Methode eignen sich am besten Formulierungen mit schwerflüchtigen Zusatzstoffen, die den Wirkstoff protahiert abgeben, wie Gummi, Zellstoff, Wachse, Polymerisate oder verdunstungshemmende, schwerflüchtige Öle oder Paraffine, sowie Formulierungen in Kapseln oder anderen Behältern (Kapillaren), die den Lockstoff entweder durch ihre Wandung oder durch enge Öffnungen abgeben. Die Wirkstoffkonzentration liegt hier im allgemeinen im Bereich von 1:1000 bis $1:10^6$.

Man kann ferner den Wirkstoff mit einem Kontakt- oder Fraßinsektizid kombinieren und auf diese Weise die angelockten Männchen direkt vernichten. Die Wirkstoffkonzentrationen liegen hierbei in der gleichen Größenordnung wie oben.

Schließlich kann man den Wirkstoff auch in vergleichsweise hohen Konzentrationen ausbringen, um die Männchen durch Desorientierung und Konfusion an der Paarung zu hindern. Hierfür werden im allgemeinen Formulierungen mit höheren Wirkstoffgehalten (10:1 bis 1:1000) eingesetzt.

Beispiel 1
EAG-Screening

Es ist bekannt, daß Duftstoffmoleküle, die in Insektenantennen und deren Geruchsrezeptoren eindringen können, das Membrampotential der Nervenzellen des Geruchsorgans bei Schmetterlingen stören und dieser Vorgang mittels in die Antennen implantierter Mikroelektroden beobachtet werden kann [Physiol., 40, 8—41(1957); Ann. Entomol. Soc. Am. 64, 266—68(1971)]. Der Grad des Zusammenbruches des Membranpotentials in der Antenne ist dabei abhängig von der Stärke des olfaktorischen Stimulus. Dies bedeutet, daß Substanzen, die das Rezeptorpotential der Riechmembran nachhaltiger stören, auch stärker stimulierend wirken als diejenigen, die nur eine geringe Erniedrigung des Membranpotentials hervorrufen. Es konnte deshalb davon ausgegangen werden, daß es möglich sein sollte, durch Elektroantennogrammtests an Antennenpräparaten von Agrotis segetum eine Vorauswahl von synthetischen potentiellen Pheromonen zu treffen, die für den Test am lebenden Tier in Frage kommen.

Folgende Tabelle zeigt die im EAG-Test gemessenen Reizamplituden [Angaben in mV] durch verschiedene Testverbindungen bei unterschiedlichen Duftquellenbeladungen.

| Testverbindung | Reizamplituden [mV] bei Duftquellenbeladungen von $\mu$g | | | | | | | |
|---|---|---|---|---|---|---|---|---|
| | $10^{-4}$ | $10^{-3}$ | $10^{-2}$ | $10^{-1}$ | $10^{0}$ | $10^{1}$ | $10^{2}$ | $10^{3}$ |
| (Z) 7-Dodecenylacetat | 0,1 | 0,1 | 0,15 | 0,2 | 0,35 | 0,4 | 0,55 | 1,1 |
| (Z) 9-Tetradedenylacetat | | 0,1 | 0,1 | 0,1 | 0,1 | 0,14 | 0,25 | 0,55 |
| (Z) 11-Tetradecenylacetat | — | 0,1 | 0,1 | 0,1 | 0,1 | 0,1 | 0,25 | 0,24 |
| (Z) 9-Hexadecenylacetat | — | 0,1 | 0,1 | 0,1 | 0,1 | 0,1 | 0,1 | 0,1 |
| (Z) 7-Dodecenylacetat | 0,458 | 0,625 | 0,75 | 0,79 | 0,92 | 1,17 | 1,5 | — |
| (Z) 8-Dodecenylacetat | — | — | — | — | — | — | 1,1 | — |
| (Z) 9-Dodecenylacetat | — | 0,437 | 0,605 | 0,50 | 0,77 | 1,08 | 1,3 | — |
| (E) 9-Dodecenylacetat | — | 0,500 | 0,71 | 0,58 | 0,59 | 1,0 | 1,2 | — |
| (Z) 5-Decenylacetat | 0,83 | 1,22 | 1,5 | 2,0 | 3,5 | 3,5 | 3,5 | — |

**0010126**

Der Versuch zeigt also, daß Z(5)-Decenylacetat (enthielt etwa 2% E-Isomeres) die im EAG bei weitem wirksamste Verbindung ist.

Beispiel 2
Olfaktometertest

Die relative Lockwirkung der verschiedenen Substanzen auf Agrotis segetum-Männchen wurde mit Hilfe eines Olfaktometertests durchgeführt [Microchim. Acta, 1957/3—4, S. 385—389]. Folgende Tabelle zeigt die Ergebnisse der Untersuchungen in einem Rohrolfaktometer bei verschiedenen Duftquellenbeladungen.

| Testverbindung | Duftquellenbeladung von | | | | | |
|---|---|---|---|---|---|---|
| | $10^{-1}$ | $10^{-2}$ | $10^{-3}$ | $10^{-4}$ | $10^{-5}$ | $10^{-6}$ $\mu$g |
| (Z) 5-Decenylacetat | 0 | 1 | 2 | 3 | 3 | 3 |
| (Z) 11-Hexadecenylacetat | 1 | 0 | 0 | 0 | 0 | 0 |
| (Z) 11-Tetradecenylacetat | 1 | 1 | 0 | 0 | 0 | 0 |
| (E) 11-Tetradecenylacetat | 0 | 0 | 0 | 0 | 0 | 0 |
| (Z) 7-Dodecenylacetat | 1 | 1 | 0 | 0 | 0 | 0 |
| (Z) 9-Tetradecenylacetat | 1 | 0 | 1 | 0 | 0 | 0 |
| (E) 9-Tetradecenylacetat | 1 | 0 | 0 | 0 | 0 | 0 |

0 = keine Lockwirkung

1 = Aktivitätssteigerung, schwache Lockwirkung

2 = mittlere Lockwirkung (Antwort <50%)

3 = starke Lockwirkung (Antwort >50%)

Der Versuch zeigt, daß Z(5)-Decenylacetat (enthielt etwa 2% E-Isomeres) noch in einer Menge von $10^{-6}$ $\mu$g pro Duftquelle eine außerordentlich stark aktivierende Lockwirkung auf Agrotis segetum-Männchen auslöst.

Es ist außerdem auffällig, daß schon von relativ niedrigen Konzentrationen an aufwärts ($>10^{-3}$ $\mu$g) eine Verringerung des Verhaltens auf den Duftstoff erfolgt, was auf eine Adaption der Tiere und damit auf eine Inhibition der Reizbeantwortung hinweist.

Versuch 3
Identifizierung des natürlichen Pheromons

Zum Nachweis des natürlichen Pheromons von Agrotis segetum wurden von etwa 500 Agrotis segetum-Weibchen die Abdomenspitzen mit den Sexualdrüsen abgetrennt und mit Hexan extrahiert. Der Extrakt wurde nach Filtration mittels Säulenchromatographie an Kieselgel durch Pentan/Diethylether/Methanol in 17 Fraktionen aufgetrennt und die physiologische Aktivität der einzelnen Fraktionen mittels EAG-Test bestimmt. Die aktiven Fraktionen wurden unter Stickstoff eingeengt und kapillargaschromatographisch synchron mit einem Flammenionisationsdetektor und einem Elektroantennogrammdetektor analysiert. Dabei zeigte der EAG-Detektor eine physiologisch aktive Verbindung mit der gleichen Retentionszeit wie Z(5)-Decenylacetat an. Die Kochromatographie mit synthetischem Z(5)-Decenylacetat ergab identische Retentionszeiten mit denen des Drüseninhaltstoffes.

Den Beweis für das Vorhandensein von Z(5)-Decenylacetat in den Drüsen der Agrotis segetum-Weibchen erbrachte eine Analyse mit gekoppelter Kapillargaschromatographie-Massenspektroskopie. Massenchromatogramme über 17 Ionen bis m/e = 138 (für $C_{10}H_{18}$), wie sie aus dem Massenspektrum von synthetischem Z(5)-Decenylacetat entnommen wurden, zeigten, daß im Chromatogramm des Drüsenextraktes exakt zur vorher bestimmten Retentionszeit von Z(5)-Decenylacetat alle Ionen gleichzeitig auftraten.

Versuch 4
Freiland-Screening

Zur abschließenden Beurteilung der Pheromonwirkung wurde eine Freilandscreening in einem Flugkäfig mit im Labor gezüchteten Agrotis segetum-Männchen durchgeführt (Versuchsdauer: 4 Wochen). Folgende Tabelle zeigt die Ergebnisse dieses Testversuches.

6

| Pheromonmenge in μg pro Falle | Zahl der gefangenen Männchen pro Falle |
|---|---|
| $5 \cdot 10^2$ | 1 |
| $5 \cdot 10^1$ | 2 |
| 5 | 4 |
| $5 \cdot 10^{-1}$ | 18 |
| $5 \cdot 10^{-2}$ | 18 |
| $5 \cdot 10^{-3}$ | 14 |
| $5 \cdot 10^{-4}$ | 4 |
| $5 \cdot 10^{-5}$ | 1 |
| Kontrolle (unbeköderte Falle) | 0 |
| zum Vergleich: 5 Agrotis segetum-Weibchen (lebend) | 5 |

Der Versuch zeigt die stark ausgeprägte Lockwirkung des Pheromons bei geringen Konzentrationen von $10^{-2}$ bis $10^{-4}$ μg/Köder. Es ist auffallend, daß oberhalb einer Köderbeladung von $5.10^{-1}$ μg/Köder eine zunehmende Erniedrigung der Lockwirkung erfolgt. Dies zeigt, daß das Pheromon auch gut zur Bekämpfung von Agrotis segetum mittels der "Konfusionstechnik" geeignet ist.

**Patentansprüche**

1. Mittel zur Anlockung und Bekämpfung von Agrotis segetum, gekennzeichnet durch einen Gehalt an Z-(5)-Decenylacetat in Kombination mit üblichen Hilfs- und Trägerstoffen.

2. Mittel gemäß Anspruch 1, dadurch gekennzeichnet, daß es außer Z-(5)-Decenylacetat noch bis zu 10% E-(5)-Decenylacetat enthält.

3. Mittel gemäß Anspruch 2, dadurch gekennzeichnet, daß der Anteil des E-Isomeren am Gesamtwirkstoff etwa 2% beträgt.

4. Mittel gemäß Ansprüchen 1—3, dadurch gekennzeichnet, daß das Verhältnis Wirkstoff: Hilfs- und Trägerstoffe 10:1 bis $1:10^6$ beträgt.

5. Mittel gemäß Anspruch 4, dadurch gekennzeichnet, daß das Verhältnis Wirkstoff: Hilfs- und Trägerstoffe $1:10^3$ bis $1:10^6$ beträgt.

6. Verwendung von Z-(5)-Decenylacetat zur Anlockung und Bekämpfung von Agrotis segetum.

**Claims**

1. A composition for attracting and destroying Agrotis segetum containing Z-(5)-decenyl acetate in combination with usual auxiliaries and carrier substances.

2. A composition according to claim 1, containing, besides Z-(5)-decenyl acetate, up to 10% of E-(5)-decenyl acetate.

3. A composition according to claim 2, wherein the proportion of the E-isomer in the total active substance is approximately 2%.

4. A composition according to claims 1 to 3, wherein the ratio of active substance to auxiliaries and carrier substances is 10:1 to $1:10^6$.

5. A composition according to claim 4, wherein the ratio of active substance to auxiliaries and carrier substances is $1:10^3$ to $1:10^6$.

6. The use of Z-(5)-decenyl acetate for the attraction and destruction of Agrotis segetum.

**Revendications**

1. Produit pour attirer et combattre Agrotis segetum, produit caractérisé en ce qu'il contient de l'acétate de décène-5 yle-(Z) associé à des adjuvants et supports usuels.

2. Produit selon la revendication 1 caractérisé en ce qu'il contient, en plus de l'acétate de décène-5 yle-(Z), jusqu'à 10% d'acétate de décène-5 yle (E).

3. Produit selon la revendication 2 caractérisé en ce que la proportion de l'isomère E dans la matière active totale est d'environ 2%.

4. Produit selon l'une quelconque des revendications 1 à 3, caractérisé en ce que le rapport entre la matière active d'une part et les adjuvants et supports d'autre part est compris entre 10:1 et 1:10⁶.

5. Produit selon la revendication 4 caractérisé en ce que le rapport de la matière active aux adjuvants et supports est compris entre 1:10³ et 1:10⁶.

6. Application de l'acétate de décène-5 yle-(Z) pour attirer et combattre Agrotis segetum.